# EUROPÄISCHE PATENTSCHRIFT

(11) **EP 0 710 336 B1**
(45) Veröffentlichungstag und Bekanntmachung des Hinweises auf die Patenterteilung: **04.03.1998**
(21) Anmeldenummer: 95920062.7
(22) Anmeldetag: 19.05.1995
(51) Int. Cl.: F16H 55/08, F16H 55/26, B62D 3/12

(54) **ZAHNSTANGEN-GETRIEBE**
RACK-AND-PINION GEAR
ENGRENAGE A CREMAILLERE

(30) Priorität: 24.05.1994 DE 4418101
(43) Veröffentlichungstag der Anmeldung: 08.05.1996
(73) Patentinhaber: ZF FRIEDRICHSHAFEN Aktiengesellschaft, 88038 Friedrichshafen (DE)
(72) Erfinder: DANGELMAIER, Roland, D-73529 Schwäbisch Gmünd (DE); SOMMER, Rudolf, D-73527 Schwäbisch Gmünd (DE)
(86) Internationale Anmeldenummer: EP9501899
(87) Internationale Veröffentlichungsnummer: WO9532374

(56) Entgegenhaltungen:
- EP-A- 0 267 399
- WO-A-93/15947
- DE-A- 2 141 031
- DE-A- 2 526 487
- BEITZ, KÜTTNER 'Dubbel - Taschenbuch für den Maschinenbau' 1990 , SPRINGER-VERLAG , BERLIN HEIDELBERG NEW YORK siehe Seite S76, linke Spalte, Zeile 6, letzter Absatz - Seite S76, linke Spalte, Zeile 11, letzter Absatz siehe Seite S77; Abbildung 24
- PATENT ABSTRACTS OF JAPAN vol. 012 no. 416 (M-759) ,4.November 1988 & JP,A,63 152767 (VICTOR CO OF JAPAN LTD) 25.Juni 1988,

## Beschreibung

Die Erfindung betrifft ein Zahnstangen-Getriebe, insbesondere ein Zahnstangen-Lenkgetriebe, nach dem Oberbegriff des Anspruches 1. Ein derartiges Zahnstangen-Getriebe enthält ein Ritzel, das mit einer Zahnstange unter einem festen Ritzel-Einbauwinkel in Eingriff steht. Außerdem betrifft die Erfindung die Verwendung eines solchen Zahnstangen-Getriebes in einer Zahnstangen-Hilfskraftlenkung.

Ein derartiges Zahnstangen-Getriebe ist beispielsweise bekannt aus der DE-A-21 41 031. Weist ein derartiges Zahnstangen-Getriebe unkorrigierte Zahnflanken an den Zähnen des Ritzels und der Zahnstange auf, so kann es passieren, daß sich die Zahnflanken von Ritzel und Zahnstange nicht auf der ganzen Länge berühren und deshalb nur teilweise an der Leistungsübertragung beteiligt sind. Ein solcher Mangel kann beispielsweise auftreten als Folge von Fertigungstoleranzen oder Einbaufehlern, wie beispielsweise Unterschiede zwischen dem Zahnstangen-Schrägungswinkel und dem Ritzel-Einbauwinkel. In einem solchen Fall können sogenannte "Kantenträger" auftreten, dies bedeutet, daß die Zahnflanken der Ritzelzähne die Zahnflanken der Zahnstangen-Zähne nur in zwei Berührstellen berühren, die am Übergang von den Zahnflanken der Zahnstangen-Zähne in den Zahnstangen-Außendurchmesser liegen. An diesen Stellen tritt eine hohe Belastung, eventuell auch eine Überlastung der Verzahnungen, auf. Als Folge kann zu hoher Verschleiß oder auch ein Zahnbruch entstehen.

Aus diesen Gründen ist es üblich, den Ritzelzahn in einer breitenkorrigierten Form herzustellen. Selbstverständlich beeinflußt auch dann der eingangs genannte Winkelunterschied die Lage der Berührstellen zum Zahnstangen-Außendurchmesser. Durch die Wahl einer entsprechend großen Breitenkorrektur der Zahnflanken der Ritzelzähne wird jedoch ein Hinauswandern der Berührstellen bis zu dem Zahnstangen-Außendurchmesser vermieden.

Der Einsatz von Ritzeln mit breitenkorrigierten Zahnflanken ist jedoch nicht unproblematisch. Die Herstellung der Verzahnung erfolgt im allgemeinen durch ein Abwälz- oder Formverfahren. Dabei kommt es bei der Erzeugung einer Breitenkorrektur nicht nur zu dünnen Zahnenden der Ritzelzähne, sondern auch zu einer Reduzierung des Fußkreisdurchmessers, die der Ritzelstabilität abträglich ist.

Will man diese Mängel vermeiden, so müssen die Rechtsflanken der Ritzelzähne getrennt von den Linksflanken bearbeitet werden. Dies erfordert jedoch einen hohen Fertigungsaufwand und damit höhere Kosten.

Der Erfindung liegt die Aufgabe zugrunde, ein Zahnstangen-Getriebe nach dem Oberbegriff des Anspruches 1 derart zu verbessern, daß die genannten Mängel vermieden werden. Insbesondere sollen die Berührpunkte zwischen den Zahnflanken der Ritzel- und der Zahnstangen-Zähne durch einfache Mittel an Stellen gebracht werden können, die einen guten Eingriff der Verzahnungen gewährleisten.

Diese Aufgabe wird durch das im Anspruch 1 gekennzeichnete Zahnstangen-Getriebe gelöst. Die Lösung erfolgt dadurch, daß die Zahnflanken wenigstens eines Zahnstangen-Zahnes eine Breitenkorrektur aufweisen. Zahnstangen-Verzahnungen mit derartig korrigierten Zahnflanken lassen sich einfach und sehr genau herstellen, beispielsweise durch ein Taumelschmiede-Verfahren.

Zweckmäßige und vorteilhafte Ausgestaltungen der Erfindung sind in den Unteransprüchen angegeben. Die Erfindung ist jedoch nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Als einfachste Form der Breitenkorrektur hat sich die Form eines Kreisbogens erwiesen. Jedoch können auch trapez- oder ellipsenförmige Breitenkorrekturen vorteilhaft sein. Durch entsprechende Festlegung der Mittelpunkte der Kreisbogen der Breitenkorrektur kann die Lage der Berührstellen der unkorrigierten Zahnflanken des Ritzels mit den Zahnflanken der Zahnstange festgelegt werden. Die Berührstellen können beispielsweise auf der Längsachse der Zahnstange oder auf einer Normalen zur Achse des Ritzels liegen, wobei die Normale durch den fiktiven Schnittpunkt der Achsen von Ritzel und Zahnstange verläuft.

Es ist ohne weiteres möglich, bedarfsweise an ein und derselben Zahnstange unterschiedliche Formen der Breitenkorrektur vorzusehen oder auch einen Teil der Zahnstangen-Zähne oder einzelne Zahnflanken der Zahnstangen-Zähne unkorrigiert zu lassen.

Besonders vorteilhaft läßt sich die Erfindung anwenden bei Zahnstangen-Hilfskraftlenkungen, bei denen zur Betätigung der Steuerventile eine Schwenkbewegung des Ritzels benutzt wird.

Im folgenden wird die Erfindung anhand dreier in der Zeichnung dargestellter Ausführungsbeispiele näher erläutert.

Es zeigen:
- Fig. 1: einen Längsschnitt durch die Verzahnung der Zahnstange und des Ritzels mit der Lage der Berührstellen bei symmetrischer, kreisbogenförmiger Korrektur;
- Fig. 2: einen entsprechenden Schnitt wie in Fig. 1, jedoch mit einer asymmetrischen, kreisbogenförmigen Korrektur;

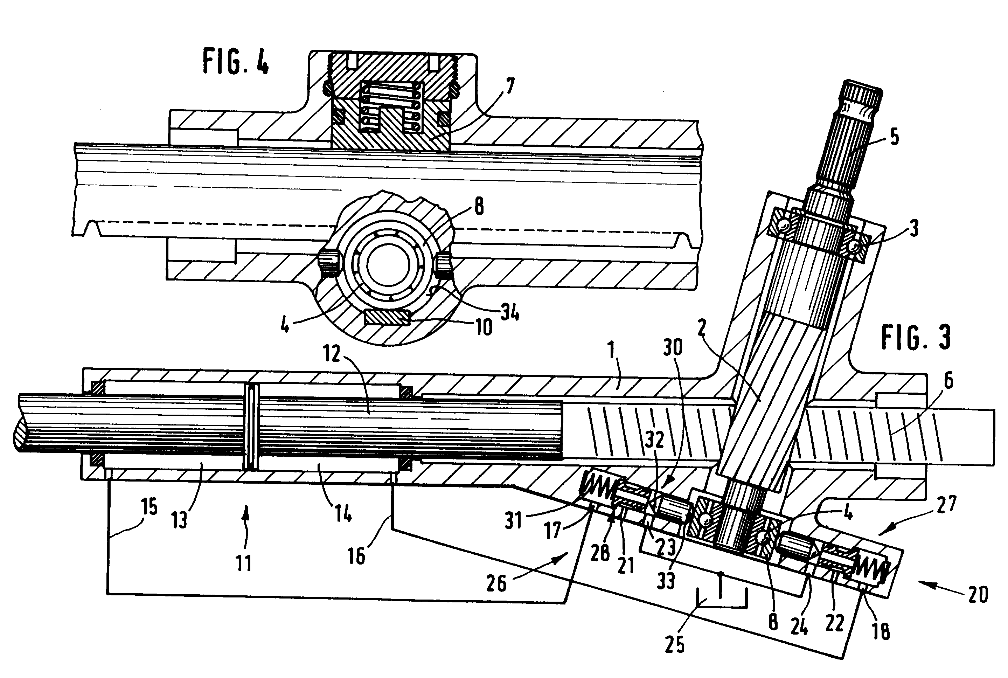

- Fig. 3: einen Längsschnitt durch eine Zahnstangen-Hilfskraftlenkung und
- Fig. 4: einen Teilquerschnitt durch die Zahnstangen-Hilfskraftlenkung der Fig. 3 im Bereich des Ritzels.

Von dem Zahnstangen-Getriebe sind nur die erfindungswesentlichen Teile, nämlich ein Ritzel 51 und eine Zahnstange 52 dargestellt. Allgemein bekannte Gehäuse- und Lagerteile sind für die Erfindung ohne Bedeutung und werden der Übersichtlichkeit halber nicht dargestellt. Von dem Ritzel 51 ist die Kontur nur angedeutet, ein Ritzelzahn 53 ist im Schnitt gezeigt. Die Zahnstange 52 weist mehrere Zahnstangen-Zähne 54 auf, die ebenfalls im Schnitt gezeigt sind. Die gemeinsame Schnittebene ist gelegt parallel zur Achse 55 des Ritzels 51 und zur Achse 56 der Zahnstange 52 und durch zwei Berührstellen 57 und 58, in denen sich die Zahnflanken 60 des Ritzelzahnes 53 und 61 des Zahnstangen-Zahnes 54 berühren.

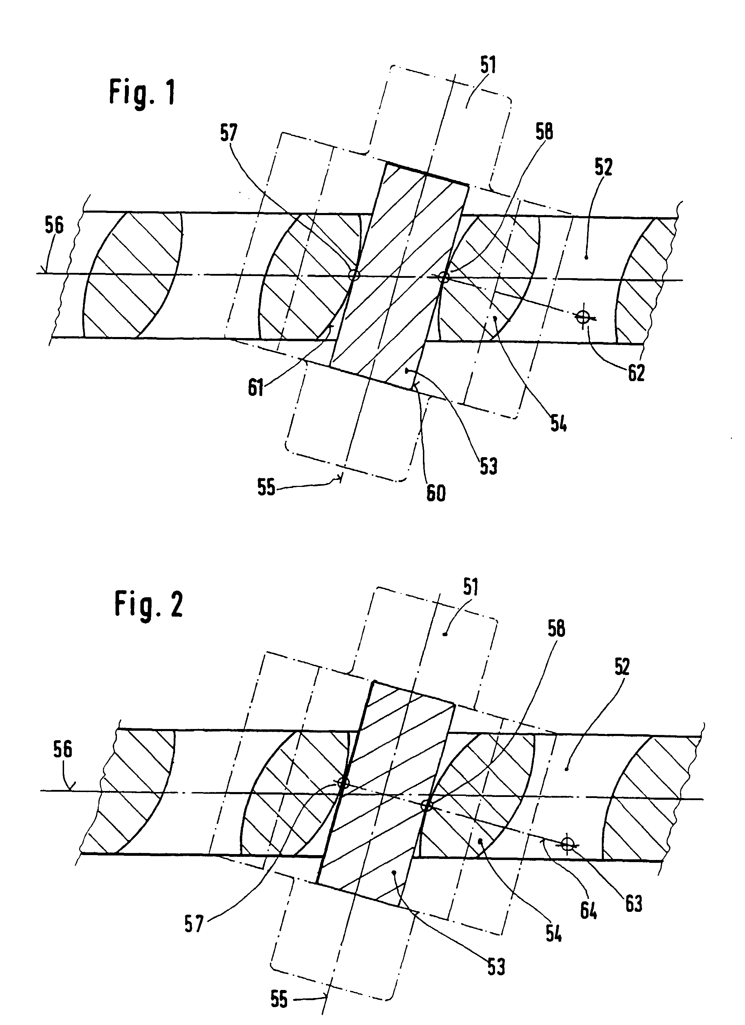

Die Zahnflanken 60 der Ritzelzähne 53 sind unkorrigiert. Die Zahnflanken 61 der Zahnstangen-Zähne 54 weisen eine Breitenkorrektur auf. Die Breitenkorrektur erfolgt zweckmäßigerweise in der Form eines Kreisbogens. Die Mittelpunkte 62 der Kreisbogen können unterschiedlich festgelegt sein. In Fig. 1 sind die Mittelpunkte 62 derart festgelegt, daß die Berührstellen 57 und 58 auf der in die Schnittebene projizierten Achse 56 der Zahnstange 52 liegen. Die Breitenkorrektur der Zahnstangen-Zähne 54 ist in diesem Fall symmetrisch zur Achse 56 der Zahnstange 52.

In Fig. 2 sind die Mittelpunkte 63 der Kreisbogen derart festgelegt, daß die Berührstellen 57 und 58 der unkorrigierten Zahnflanken 60 des Ritzels 53 mit den Zahnflanken 61 der Zahnstange 52 auf einer Normalen 64 zur Achse 55 des Ritzels 51 liegen. Die Normale 64 verläuft durch den Schnittpunkt der in die Schnittebene projizierten Achsen 55 und 56 des Ritzels 51 und der Zahnstange 52. Dies kann aus-Stabilitäts- und/oder Funktionsgründen zweckmäßig sein.

Anstelle einer Breitenkorrektur durch kreisbogenförmige Zahnflanken kann die Breitenkorrektur auch trapez- oder ellipsenförmig ausgebildet sein.

Im Regelfall werden alle Zahnflanken 61 der Zahnstangen-Zähne 54 mit einer gleichartigen Breitenkorrektur versehen. Es ist jedoch möglich, daß die breitenkorrigierten Zähne 54 der Zahnstange 52 untereinander unterschiedliche Formen der Breitenkorrektur aufweisen oder auch teilweise nicht korrigiert sind, wenn die Funktion des Zahnstangen-Getriebes dies erfordert.

Besonders vorteilhaft läßt sich die bisher beschriebene Erfindung bei folgender Zahnstangen-Hilfskraftlenkung anwenden (diese Zahnstangen-Hilfskraftlenkung ist Gegenstand der internationalen Patentanmeldung WO 93/15947):

In einem Lenkgehäuse 1 ist ein Ritzel 2 in zwei Lagern 3 und 4 drehbar gelagert. Das Ritzel 2 trägt an seinem einen Ende einen Lenkspindelanschluß 5 für den Anschluß an ein Lenkorgan, beispielsweise eine nicht dargestellte Lenkspindel mit einem Lenkhandrad. Eines der Lager, vorzugsweise das Lager 3, das in der Nähe des Lenkspindelanschlusses 5 liegt, ist als Festlager ausgebildet. Das andere Lager, vorzugsweise das Lager 4, das dem Lenkspindelanschluß 5 abgewandt ist, ist als Loslager ausgebildet.

Das Ritzel 2 steht über seine Verzahnung in Eingriff mit einer Zahnstange 6, die in dem Lenkgehäuse 1 axial verschiebbar geführt ist. Die Zahnstange 6 wird mit Hilfe eines federbelasteten Druckstückes 7 in bekannter Weise gegen die Verzahnung des Ritzels 2 gedrückt. Das Ritzel 2 stützt sich an seiner einen Seite in dem Festlager 3 und an seiner anderen Seite über das Loslager 4 in dem Lenkgehäuse 1 ab. Vorzugsweise befindet sich zwischen dem Außenring 8 des Loslagers 4 und dem Lenkgehäuse 1 ein Druckplättchen 10, das fest mit dem Lenkgehäuse 1 verbunden ist. Das Druckplättchen 10 dient dazu, eine reibungsarme und verschleißarme Bewegung des Loslagers 4 zu ermöglichen. Der Außenring 8 des Loslagers 4 kann auf dem Druckplättchen 10 abrollen. Da die Bewegung des unteren Teiles des Ritzels 2 und des Loslagers 4 jedoch sehr klein ist, wie im weiteren Verlauf der Beschreibung erklärt werden wird, so kann man gegebenenfalls auf das Druckplättchen 10 verzichten.

Zur Hilfskraftunterstützung dient ein Servomotor 11, dessen Kolbenstange 12 fest mit der Zahnstange 6 verbunden ist. Der Servomotor 11 enthält zwei Zylinderräume 13 und 14, die über Arbeitsleitungen 15 und 16 mit zwei Zylinderanschlüssen 17 und 18 einer Steuereinrichtung 20 verbunden sind. Die Steuereinrichtung 20 weist außerdem noch zwei Zulaufanschlüsse 21 und 22 auf, an die eine nicht dargestellte Druckmittelquelle angeschlossen ist. An zwei Rücklaufanschlüssen 23 und 24 ist ein Behälter 25 angeschlossen.

Die Steuereinrichtung 20 enthält zwei Steuerventile 26 und 27, die als Sitzventile ausgebildet sind und deren Achsen im wesentlichen senkrecht zu der Achse des Ritzels 2 stehen. Die beiden Steuerventile 26 und 27 sind im Bereich des Loslagers 4 angeordnet.

Die beiden Steuerventile 26 und 27 sind im wesentlichen gleich ausgebildet. Jedes Steuerventil 26, 27 enthält ein Einlaß-Sitzventil 28 und ein Auslaß-Sitzventil 30. Das Einlaß-Sitzventil 28 ist in Neutralstellung der Lenkung durch die Kraft einer Feder 31 geschlossen gehalten. Das Auslaß-Sitzventil 30 ist in Neutralstellung geöffnet. Dadurch sind die Zylinderräume 13 und 14 mit dem Rücklauf zu dem Behälter 25 verbunden. Ein Schließkörper 32 jedes Auslaß-Sitzventils 30 besitzt einen Ventilstößel 33, der an dem Außenring 8 des Loslagers 4 anliegt.

Die Betätigungswege der Steuerventile 26 und 27 sind in der Zeichnung der Anschaulichkeit wegen übertrieben groß dargestellt. In Wirklichkeit betragen die Steuerwege nur wenige zehntel Millimeter. Der Durchmesser einer Bohrung 34 des Lenkgehäuses 1, in dem das Loslager 4 angeordnet ist, ist deshalb nur geringfügig größer als der Außendurchmesser des Außenringes 8 des Loslagers 4. Das Druckplättchen 10 kann deshalb gegebenenfalls entfallen.

Im folgenden wird die Funktion der erfindungsgemäßen Zahnstangen-Hilfskraftlenkung beschrieben: Wird durch eine Drehung des nicht dargestellten Lenkhandrades das Ritzel 2 beispielsweise im Sinne einer Rechtslenkung gedreht, so wälzt sich die Verzahnung des Ritzels 2 zunächst in der Verzahnung der momentan noch feststehenden Zahnstange 6 ab. Daduch wird das Ritzel 2 um das Festlager 3 um einen sehr geringen Winkel geschwenkt. Das Loslager 4 wird nach links verschoben. Diese Bewegung wird über den Außenring 8 des Loslagers 4 auf den Ventilstößel 33 und damit auf den Schließkörper 32 des Auslaß-Sitzventils 30 übertragen. Der Schließkörper 30 wird so lange nach links bewegt, bis die Verbindung von der Arbeitsleitung 15 zum Behälter 25 unterbrochen ist. Mit weiterer Verschiebung des Schließkörpers 30 wird der Schließkörper des Einlaß-Sitzventils 28 gegen die Kraft der Feder 31 nach links bewegt. Durch die erfindungsgemäße Breitenkorrektur sind die Eingriffsverhältnisse bei diesen Verzahnungsbewegungen besonders günstig. Dadurch wird die Verbindung von dem Zulaufanschluß 21 über die Arbeitsleitung 15 zu dem Zylinderraum 13 geöffnet. In dem Zylinderraum 13 baut sich ein Druck auf, der die Zahnstange 6 entsprechend der Bewegung an dem Lenkhandrad nach rechts schiebt. Gleichzeitig ergibt sich eine Druckkraft auf den Schließkörper des Einlaß-Sitzventils 28 in Schließrichtung und es stellt sich ein Gleichgewicht ein zwischen dem Druck in dem Zylinderraum 13 und dem Drehmoment an dem Lenkhandrad.

Durch den symmetrischen Aufbau der Steuerventile 26 und 27 ergibt sich bei entgegengesetzter Drehrichtung ein entsprechender Funktionsablauf.

### Bezugszeichen

- 1: Lenkgehäuse
- 2: Ritzel
- 3: Lager (Festlager)
- 4: Lager (Loslager)
- 5: Lenkspindelanschluß
- 6: Zahnstange
- 7: Druckstück
- 8: Außenring
- 9: -
- 10: Druckplättchen
- 11: Servomotor
- 12: Kolbenstange
- 13: Zylinderraum
- 14: Zylinderraum
- 15: Arbeitsleitung
- 16: Arbeitsleitung
- 17: Zylinderanschluß
- 18: Zylinderanschluß
- 19: -
- 20: Steuereinrichtung
- 21: Zulaufanschluß
- 22: Zulaufanschluß
- 23: Rücklaufanschluß
- 24: Rücklaufanschluß
- 25: Behälter
- 26: Steuerventil
- 27: Steuerventil
- 28: Einlaß-Sitzventil
- 29: -
- 30: Auslaß-Sitzventil
- 31: Feder
- 32: Schließkörper
- 33: Ventilstößel
- 34: Bohrung

- 51: Ritzel
- 52: Zahnstange
- 53: Ritzelzahn
- 54: Zahnstangen-Zahn
- 55: Achse des Ritzels
- 56: Achse der Zahnstange
- 57: Berührstelle
- 58: Berührstelle
- 59: -
- 60: Zahnflanke
- 61: Zahnflanke
- 62: Mittelpunkt
- 63: Mittelpunkt
- 64: Normale

## Patentansprüche

1. Zahnstangen-Getriebe, insbesondere Zahnstangen-Lenkgetriebe, mit einem Ritzel (51), das mit einer Zahnstange (52) unter einem festen Ritzel-Einbauwinkel in Eingriff steht, dadurch **gekennzeichnet,** daß die Zahnflanken (61) wenigstens eines Zahnstangen-Zahnes (54) eine Breitenkorrektur aufweisen.

2. Zahnstangen-Getriebe nach Anspruch 1, dadurch **gekennzeichnet,** daß die Breitenkorrektur die Form eines Kreisbogens hat.

3. Zahnstangen-Getriebe nach Anspruch 2, dadurch **gekennzeichnet,** daß bei zwei breitenkorrigierten Zahnflanken (61) zweier Zahnstangen-Zähne (54) die Mittelpunkte (62) der Kreisbogen derart festgelegt sind, daß die Berührstellen (57, 58) der unkorrigierten Zahnflanken (60) des Ritzels (51) mit den Zahnflanken (61) der Zahnstange (52) auf einer Projektion der Achse (56) der Zahnstange (52) in eine Ebene parallel zur Achse (55) des Ritzels (51) und zur Achse (56) der Zahnstange (52) liegen.

4. Zahnstangen-Getriebe nach Anspruch 2, dadurch **gekennzeichnet,** daß bei zwei breitenkorrigierten Zahnflanken (61) zweier Zahnstangen-Zähne (54) die Mittelpunkte (63) der Kreisbogen derart festgelegt sind, daß die Berührstellen (57, 58) der unkorrigierten Zahnflanken (60) des Ritzels (51) mit den Zahnflanken (61) der Zahnstange (52) auf einer Normalen (64) zur Achse (55) des Ritzels (51) liegen, wobei die Normale (64) durch den fiktiven Schnittpunkt der Achsen (55, 56) des Ritzels (51) und der Zahnstange (52) verläuft.

5. Zahnstangen-Getriebe nach Anspruch 1, dadurch **gekennzeichnet,** daß die Breitenkorrektur die Form eines Trapezes oder einer Ellipse hat.

6. Zahnstangen-Getriebe nach Anspruch 1, dadurch **gekennzeichnet,** daß die breitenkorrigierten Zahnflanken (61) der Zahnstangen-Zähne (54) unterschiedliche Formen der Breitenkorrektur aufweisen.

7. Zahnstangen-Getriebe nach einem der Ansprüche 1 bis 6, dadurch **gekennzeichnet,** daß alle Zahnstangen-Zähne (54) breitenkorrigierte Zahnflanken (61) aufweisen.

8. Zahnstangen-Hilfskraftlenkung, insbesondere für Kraftfahrzeuge, mit folgenden Merkmalen:
- in einem Lenkgehäuse (1) ist ein Ritzel (2) drehbar gelagert;
- eine in dem Lenkgehäuse (1) axial verschiebbar geführte Zahnstange (6) wird durch ein federbelastetes Druckstück (7) in Eingriff mit dem Ritzel (2) gehalten;
- zur Hilfskraftunterstützung ist ein Servomotor (11) trieblich mit der Zahnstange (6) verbunden;
- eine Steuereinrichtung (20) ist in Abhängigkeit von einer Bewegung des Ritzels (2) verstellbar;
- das Ritzel (2) ist schwenkbar gelagert in einem Festlager (3) und in einem Loslager (4);
- im Bereich des Loslagers (4) ist die Steuereinrichtung (20) in der Form zweier Steuerventile (26, 27) ausgebildet;
- die Steuerventile (26, 27) sind als Sitzventile ausgebildet, deren Achsen im wesentlichen senkrecht zu der Achse des Ritzels (2) stehen,
dadurch **gekennzeichnet,** daß die Zahnflanken wenigstens eines Zahnstangen-Zahnes eine Breitenkorrektur nach einem der Ansprüche 1 bis 7 aufweisen.

## Claims

1. Rack-and-pinion gear, in particular rack-and-pinion steering gear, having a pinion (51) which meshes with a gear rack (52) at a fixed pinion mounting angle, characterized in that the tooth flanks (61) of at least one gear rack tooth (54) have a width correction.

2. Rack-and-pinion gear according to claim 1, characterized in that the width correction is in the shape of a circular arc.

3. Rack-and-pinion gear according to claim 2, characterized in that, in the case of two width-corrected tooth flanks (61) of two gear rack teeth (54), the centres (62) of the circular arcs are fixed in such a way that the points of contact (57, 58) of the uncorrected tooth flanks (60) of the pinion (51) with the tooth flanks (61) of the gear rack (52) lie on a projection of the axis (56) of the gear rack (52) into a plane parallel to the axis (55) of the pinion (51) and to the axis (56) of the gear rack (52).

4. Rack-and-pinion gear according to claim 2, characterized in that, in the case of two width-corrected tooth flanks (61) of two gear rack teeth (54), the centres (63) of the circular arcs are fixed in such a way that the points of contact (57, 58) of the uncorrected tooth flanks (60) of the pinion (51) with the tooth flanks (61) of the gear rack (52) lie on a normal line (64) relative to the axis (55) of the pinion (51), the normal line (64) extending through the hypothetical point of intersection of the axes (55, 56) of the pinion (51) and the gear rack (52).

5. Rack-and-pinion gear according to claim 1, characterized in that the width correction is trapezoidal or elliptical in shape.

6. Rack-and-pinion gear according to claim 1, characterized in that the width-corrected tooth flanks (61) of the gear rack teeth (54) have differing shapes of width correction.

7. Rack-and-pinion gear according to one of claims 1 to 6, characterized in that all of the gear rack teeth (54) have width-corrected tooth flanks (61).

8. Rack-and-pinion power-assisted steering, in particular for motor vehicles, having the following features:
- a pinion (2) is rotatably supported in a steering housing (1);
- a gear rack (6), which is guided in an axially displaceable manner in the steering housing (1), is held in mesh with the pinion (2) by a springloaded thrust piece (7);
- for power assistance, a servomotor (11) is drive-connected to the gear rack (6) ;
- a control device (20) is adjustable in dependence upon a movement of the pinion (2) ;
- the pinion (2) is pivotally supported in a locating bearing (3) and in a floating bearing (4);
- in the region of the floating bearing (4) the control device (20) takes the form of two control valves (26, 27);
- the control valves (26, 27) take the form of seat valves, the axes of which are substantially at right angles to the axis of the pinion (2),
characterized in that the tooth flanks of at least one gear rack tooth have a width correction according to one of claims 1 to 7.

## Revendications

1. Mécanisme d'entraînement à crémaillère, notamment pour direction à crémaillère, comportant un pignon (51) qui est en prise avec une crémaillère (52) sous un angle de positionnement fixe du pignon, caractérisé en ce que les flancs (61) des dents d'au moins une des dents (54) de la crémaillère présentent une rectification en largeur.

2. Mécanisme d'entraînement à crémaillère selon la revendication 1, caractérisé en ce que la rectification en largeur présente une forme d'arc circulaire.

3. Mécanisme d'entraînement à crémaillère selon la revendication 2, caractérisé en ce que sur deux flancs (61) de dents rectifiées en largeur, de deux dents de crémaillère (54), les centres (62) des arcs de cercles sont positionnés de telle manière que les points de contact (57, 58) des flancs de dents non rectifiées (60) du pignon (51) se situent avec les flancs (61) des dents de la crémaillère (52) sur la projection de l'axe (56) de la crémaillère (52) dans un plan parallèle à l'axe (55) du pignon (51) et à l'axe (56) de la crémaillère (52).

4. Mécanisme d'entraînement à crémaillère selon la revendication 2, caractérisé en ce que sur deux flancs (61) de dents rectifiées en largeur, de deux dents de crémaillère (54), les centres (63) des arcs de cercles sont positionnés de telle manière que les points de contact (57, 58) des flancs de dents non rectifiées (60) du pignon (51) se situent avec les flancs (61) des dents de la crémaillère (52) sur une normale (64) à l'axe (55) du pignon (51), de telle sorte que cette normale (64) passe par l'intersection fictive des axes (55, 56) du pignon (51) et de la crémaillère (52).

5. Mécanisme d'entraînement à crémaillère selon la revendication 1, caractérisé en ce que la rectification en largeur a la forme d'un trapèze ou d'une ellipse.

6. Mécanisme d'entraînement à crémaillère selon la revendication 1, caractérisé en ce que les flancs (61) des dents de la crémaillère (54) rectifiées présentent des formes diverses.

7. Mécanisme d'entraînement à crémaillère selon les revendications 1 à 6, caractérisé en ce que toutes les dents de la crémaillère (54) ont des flancs (61) rectifiés en largeur.

8. Mécanisme d'entraînement à crémaillère, notamment pour véhicule automobile comportant :
- un pignon (2) rotatif logé dans un boîtier de direction (1);
- une crémaillère (6) mobile axialement, montée dans le boîtier de direction (1) et appuyée par une pièce d'appui (7) sollicitée par un ressort en prise avec le pignon (2);
- un servomoteur (11) couplé à la crémaillère (6) pour assurer une assistance à la direction;
- un dispositif de direction (20) qui peut être déplacé en fonction d'un mouvement du pignon (2;)
- un pignon (2) pivotant monté dans un palier fixe (3) et dans un palier libre (4);
- le mécanisme de direction (20) est conçu sous la forme de deux soupapes de direction (26, 27) dans la zone du palier libre (4);
- les soupapes de direction (26, 27) sont des soupapes à siège dont les axes sont sensiblement perpendiculaires par rapport à l'axe du pignon (2),
caractérisé en ce que les flancs des dents d'au moins une dent de la crémaillère présentent une rectification en largeur selon l'une quelconque des revendications 1 à 7.
